# EUROPEAN PATENT APPLICATION

(11) **EP 1 101 774 A1**
(43) Date of publication of application: **23.05.2001**
(21) Application number: 00310221.7
(22) Date of filing: 17.11.2000
(51) Int. Cl.: C08F 12/08, C08F 4/64, C07F 17/00

(54) **Multi-metallic metallocene catalysts for polymerization of styrene and method of polymerization using the same**

(30) Priority: 18.11.1999 KR 5130899
(71) Applicant: SAMSUNG ELECTRONICS CO., LTD., Suwon-city, Kyungki-do 441-373 (KR)
(72) Inventor: Lyu, Yi-Yeol, Yuseong-gu, Taejeon, 305-390 (KR)
(74) Representative: Kyle, Diana

(57) **Abstract**

The metallocene catalyst of the present invention is a multi-metallic metallocene catalyst having three or four transition metals per one molecule, the metallocene catalyst having a structure of linking each ancillary ligand of the transition metal by a compound having two hydroxyl groups. The structure of the metallocene catalysts can be varied depending on the transition metal compound and the compound having two hydroxyl groups. The metallocene catalyst is employed with a co-catalyst for polymerization of styrene. One of the multi-metallic metallocene catalysts of the present invention is a trimetallic metallocene catalyst in which ancillary ligands of half metallocene compounds are connected each other. The trimetallic metallocene catalyst is prepared by (1) providing a bimetallic metallocene catalyst by reacting a half metallocene catalyst with a compound having two hydroxyl functional groups so that the hydroxyl functional groups are introduced to ancillary ligands of the half metallocene catalyst, and (2) reacting the bimetallic metallocene catalyst with a half metallocene catalyst. Another of the multi-metallic metallocene catalysts of the present invention is a tetrametallic metallocene catalyst in which ancillary ligands of half metallocene compounds are connected each other.

## Description

The present invention relates to multi-metallic metallocene catalysts for preparing of styrene polymers and method of polymerization using the metallocene catalysts. More specifically, the present invention relates to multi-metallic metallocene catalysts for preparing styrene polymers having a good stereoregularity, a high melting point, and a good molecular weight and molecular weight distribution even though a small amount of a co-catalyst is used, and method of polymerization using the metallocene catalysts.

Olefin or styrene polymers are generally prepared by radical polymerization, ionic polymerization, or coordination polymerization using a Ziegler-Natta catalyst. Radical or ionic polymerization provides olefin or styrene polymers having mainly an atactic structure. Coordination polymerization using a Ziegler-Natta catalyst provides olefin or styrene polymers having mainly an isotactic structure. In general, polymers are structurally divided into three groups such as atactic polymers, isotactic polymers, and syndiotactic polymers, depending on the position of benzene rings as a side chain in relation to a main chain of molecular structure of the polymers. An atactic structure means that side chains have irregular configurations. An isotactic structure means that side chains are positioned at one side relative to a main chain. A syndiotactic structure means that side chains are alternatively arranged for a main chain. The polymers having a syndiotactic structure had been only theoretically known, and practically not prepared until a metallocene catalyst was employed to the polymerization methods.

Development of the metallocene catalysts was to provide syndiotactic polystyrenes having a stereoregularity. The conventional metallocene catalysts have a structure that a Group IV transition metal compound of the Periodic Table of Elements is coordinated with ligands composed of one or two cycloalkanedienyl groups or their derivatives. The Group IV transition metals of the Periodic Table of Elements contain titanium, zirconium, and hafnium, etc. The cycloalkanedienyl groups include cyclopentadienyl, indenyl, fluorenyl group and their derivatives.

The metallocene catalysts are usually employed with a co-catalyst. The conventionally used Ziegler-Natta catalysts system is composed of a halogenated titanium compound as a main catalyst and alkylaluminum as a co-catalyst. An example of the halogenated titanium compound is titanium tetrachloride. Examples of alkylaluminum are trimethylaluminum and triethylaluminum. While, a recently developed metallocene catalyst system is employed with alkylaluminoxane as a co-catalyst, which is capable of preparing polystyrenes having a stereoregularity including isotactic and syndiotactic polystyrene. Alkylaluminoxane is produced by reacting alkylaluminum with H₂O. Especially, syndiotactic polystyrene has a structure in which benzene rings as side chains are alternatively positioned relative to the main chain of the polymer. The syndiotactic polystyrene has an excellent heat-resistance and physical properties with its melting point (Tm) of up to 270 ¢ J since the polymer has a stereoregularity comparing with the conventional amorphous atactic polystyrene, so it has been an interesting material.

European Patent Publication No. 210 615 (1987) discloses syndiotactic polystyrenes having a stereoregularity. Also, the patent discloses cyclopentadienyl titanium trichloride and alkyl-substituted cyclopentadienyl titanium trichloride such as pentamethyl cyclopentadienyl titanium trichloride to prepare syndiotactic polystyrenes. It is known that the metallocene catalysts are good in activity, molecular weight distribution, and syndiotactic index.

Japanese Patent Laid-Open Nos. 63-191811 and 03-250007 disclose a sulfur bridged metallocene catalyst. However, the inventions of the Japanese applications have their drawbacks to low yields of the catalysts. Although Japanese Patent Laid-Open Nos. 03-258812, 04-275313, and 05-105712 disclose various alkyl bridged metallocene catalysts, it is also difficult to commercialize the catalysts because of their low yields.

U.S. Patent No. 4,544,762 discloses processes for preparation of a-olefin polymers or styrene polymers having a higher stereoregularity and for preparation of polymers having a higher activity by using a transition metal catalyst such as a metallocene catalyst and the reaction product of alkyl aluminum and metal hydrate than by using a homogeneous Ziegler-Natta catalyst.

Japanese Patent Laid-Open Nos. 62-104818 and 62-187708 disclose a metallocene catalyst to polymerize a syndiotactic styrenic polymer. The metallocene catalyst has a structure of a Group IVB transition metal of the Periodic Table as its central metal and a cyclopentadienyl group derivative as its ligand, and the catalyst is employed with a cocatalyst such as an alkyl aluminoxane prepared by reacting alkyl aluminum with metal hydrate.

U.S. Patent No. 5,026,798 discloses a process for polymerizing a polymer with a high stereoregularity and a high molecular weight by using a metallocene catalyst.

Korean Patent Application No. 98-21032 discloses that the new metallocene catalysts having at least two cycloalkanedienyl groups are prepared by conjugating a general metallocene catalyst with a compound having at least two functional groups and that the new catalysts have a higher activity than conventional catalysts. In addition, U.S. Patent Application Serial Nos. 08/844,109 and 08/844,110 disclose new alkyl bridged binuclear metallocene catalysts (ABBM), silyl bridged binuclear metallocene catalysts (SBBM), and alkyl-silyl bridged binuclear metallocene catalysts (A-SBBM) for preparing a syndiotactic polystyrene having a high activity, a good stereoregularity, a high melting point, and a good molecular weight distribution.

Accordingly, the present inventors have developed new multi-metallic metallocene catalysts and the method of polymerization using the catalysts for preparing styrenic polymers having a high activity, a good stereoregularity, a high melting point, and a good molecular weight distribution.

One of the multi-metallic metallocene catalysts of the present invention is a trimetallic metallocene catalyst in which ancillary ligands of half metallocene compounds are connected each other. The trimetallic metallocene catalyst is prepared by (1) providing a bimetallic metallocene catalyst by reacting a half metallocene catalyst with a compound having two hydroxyl functional groups so that the hydroxyl functional groups are introduced to ancillary ligands of the half metallocene catalyst, and (2) reacting the bimetallic metallocene catalyst with a half metallocene catalyst.

Another of the multi-metallic metallocene catalysts of the present invention is a tetrametallic metallocene catalyst in which ancillary ligands of half metallocene compounds are connected each other. The tetrametallic metallocene catalyst is prepared by (1) providing a bimetallic metallocene catalyst by reacting a half metallocene catalyst with a compound having two hydroxyl functional groups so that the hydroxyl functional groups are introduced to ancillary ligands of the half metallocene catalyst, and (2) reacting two molecules of the bimetallic metallocene catalyst.

The metallocene catalyst of the present invention is a multi-metallic metallocene catalyst having three or four transition metals per one molecule, the metallocene catalyst having a structure of linking each ancillary ligand of the transition metal by a compound having two hydroxyl groups. The structure of the metallocene catalysts can be varied depending on the transition metal compound and the compound having two hydroxyl groups. The metallocene catalyst is employed with a co-catalyst for polymerization of styrene.

A feature of the present invention is the provision of metallocene catalysts that are capable of preparing olefin or styrene polymers having a high activity, a good stereoregularity, a high melting point, and a good molecular weight distribution.

Another feature of the present invention is the provision of highly active metallocene catalysts that are capable of preparing a large amount of olefin or styrene polymers in the presence of a small amount of a co-catalyst.

A further feature of the present invention is the provision of a method of preparing a metallocene catalyst and a polymerization method of effectively preparing olefin or styrene polymers using the metallocene catalyst.

The above and other objects and advantages of this invention will be apparent from the ensuing disclosure and appended claims.

The metallocene catalyst of the present invention is a multi-metallic metallocene catalyst having three or four transition metals per one molecule. The metallocene catalyst has a structure of linking each ancillary ligand of the transition metal by a compound having two hydroxyl groups. The structure of the metallocene catalysts can be varied depending on the transition metal compound and the compound having two hydroxyl groups.

One of the multi-metallic metallocene catalysts of the present invention is a trimetallic metallocene catalyst in which ancillary ligands of half metallocene compounds are connected each other. To prepare the trimetallic metallocene catalyst, a bimetallic metallocene catalyst is first prepared by reacting a half metallocene catalyst with a compound having two hydroxyl functional groups. In the bimetallic metallocene catalyst, the hydroxyl functional groups are introduced to ancillary ligands of the half metallocene compound. Then the bimetallic metallocene catalyst is reacted with a half metallocene catalyst to prepare the trimetallic metallocene catalyst.

Another of the multi-metallic metallocene catalysts of the present invention is a tetrametallic metallocene catalyst in which ancillary ligands of half metallocene compounds are connected each other. To prepare the tetrametallic metallocene catalyst, a bimetallic metallocene catalyst is first prepared by reacting a half metallocene catalyst with a compound having two hydroxyl functional groups. In the bimetallic metallocene, the hydroxyl functional groups are introduced to ancillary ligands of the half metallocene compound. Then two molecules of the bimetallic metallocene catalyst are reacted to prepare the trimetallic metallocene catalyst.

The metallocene catalyst according to the present invention is employed with a co-catalyst for polymerization of styrene. The co-catalyst is an organometallic compound or a mixture of a non-coordinated Lewis acid and alkylaluminum as it is widely known. The organometallic compound is usually alkylaluminoxane or an organoaluminum compound.

According to the present invention, styrenic polymers are polymerized in the catalyst system comprising a metallocene catalyst and a co-catalyst of the present invention. The monomers for polymerization include styrene and styrene derivatives. The monomers are homopolymerized or copolymerized.

To prepare a trimetallic metallocene catalyst according to the present invention, a bimetallic metallocene catalyst represented by the following general formula (C) is first prepared by reacting a transition metal compound represented by the following general formula (A) with a compound having two hydroxyl functional groups represented by the following general formula (B). In the bimetallic metallocene catalyst, the hydroxyl functional groups are introduced to ancillary ligands of the half metallocene compound. Then the bimetallic metallocene catalyst is reacted with a half metallocene compound represented by the following general formula (A) to prepare the trimetallic metallocene catalyst.

To prepare a tetrametallic metallocene catalyst according to the present invention, a bimetallic metallocene catalyst represented by the following general formula (C) is first prepared by reacting a transition metal compound represented by the following general formula (A) with a compound having two hydroxyl functional groups represented by the following general formula (B). In the bimetallic metallocene catalyst, the hydroxyl functional groups are introduced to ancillary ligands of the half metallocene compound. Then the bimetallic metallocene catalyst is reacted with a half metallocene compound represented by the following general formula (A) and a compound having two hydroxyl functional groups represented by the following general formula (B) to prepare the tetrametallic metallocene catalyst.

Alternatively, two molecules of the bimetallic metallocene catalyst are reacted to prepare the tetrametallic metallocene catalyst.

MR¹ ₐR² _{b}R³ _{c}R⁴ _{4-(a+b+c)} (A)

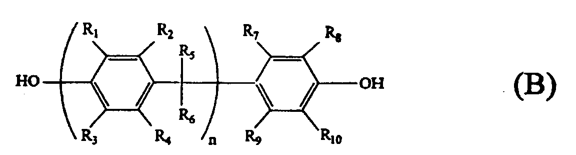

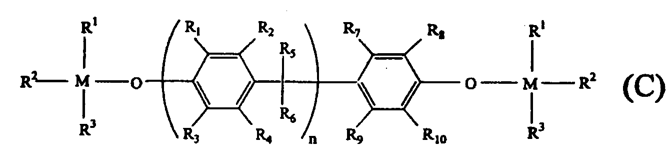

where M in the formulas (A), (B), and (C) represents a transition metal of Group IV of the Periodic Table such as titanium, zirconium or hafnium; R¹, R², R³ and R⁴ in the formulas (A) and (C) are respectively a hydrogen atom, a halogen atom, an alkyl group of C₁₋₂₀, a cycloalkyl group of C₁₋₂₀, an alkoxy group of C₁₋₂₀, an aryl group of C₆₋₂₀, an alkylaryl group of C₆₋₂₀, an arylalkyl group of C₆₋₂₀, a cyclopentadienyl group, a substituted cyclopentadienyl group, an indenyl group, a substituted indenyl group, a fluorenyl group, or a substituted fluorenyl group; a, b and c are respectively an integer of 0 to 4; R₁, R₂, R₃, R₄, R₅, R₆, R₇, R₈, R₉, and R₁₀ in the formulas (B) and (C) are respectively a hydrogen atom, an alkyl group of C₁₋₂₀, a cycloalkyl group of C₁₋₂₀, an alkoxy group of C₁₋₂₀, an aryl group of C₁₋₂₀, an alkylaryl group of C₁₋₂₀, or an arylalkyl group of C₆₋₂₀; and n is an integer of 0 to 5.

The representative examples of the transition metal compound represented by the general formula (A) include pentamethyl cyclopentadienyl titanium trimethoxide, 1,2,3,4-tetramethyl cyclopentadienyl titanium trimethoxide, 1,2,3-trimethyl cyclopentadienyl titanium trimethoxide, 1,2-dimethyl cyclopentadienyl titanium trimethoxide, 1-methyl cyclopentadienyl titanium trimethoxide, cyclopentadienyl titanium trimethoxide, 1,2,3,4-tetramethyl-5-ethyl cyclopentadienyl titanium trimethoxide, and so on.

The representative examples of the compound having two hydroxyl groups represented by the general formula (B) include 4,4'-dihydroxyphenyl methane, 2,2-bis(4-hydroxyphenyl) propane, 2,2-bis(4-hydroxyphenyl) butane, 2,2-bis(4-hydroxy-3,5-dimethylphenyl) propane, 4,4'-(1-α-methylbenzylidene) bisphenol, 4,4'-dihydroxyphenyl methane, 1,1-bis(4-hydroxyphenyl) ethane, 4,4'-ethylidene bisphenol, 2,2'-methylene bis(6-t-butyl-4-methylphenol), 2,2'-methylene bis(6-t-butyl-4-ethylphenol), α,α'-bis(4-hydroxyphenyl)-1,4-diisopropyl benzene, α,α'-bis(4-hydroxy-3,5- dimethylphenyl)-1,4-diisopropyl benzene, and so on.

The representative examples of the metallocene catalysts according to the present invention are represented by the following general formulas. The trimetallic metallocene catalyst is represented by the following general formula (I), and the tetrametallic metallocene catalyst by the following general formula (II): 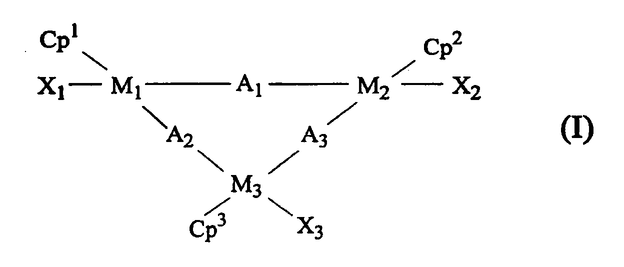 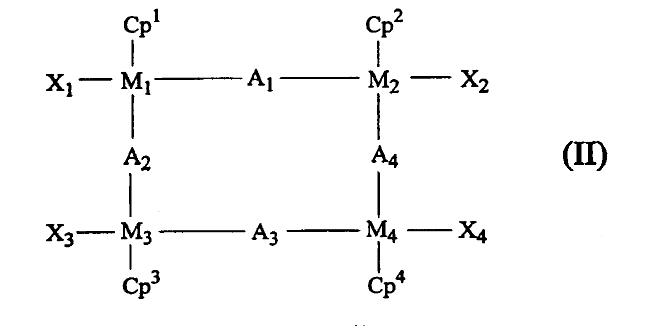 wherein M₁, M₂, M₃ and M₄ in formulas (I) and (II) are respectively a transition metal of Group IV of the Periodic Table such as titanium, zirconium or hafnium;
Cp¹, Cp², Cp³ and Cp⁴ are respectively selected from the group consisting of a cyclopentadienyl group, an indenyl group, a fluorenyl group, and derivatives thereof, form η⁵-bond with a transition metal such as M₁, M₂, M₃ and M₄;
A₁, A₂, A₃, and A₄ are represented by the following general formula (III); 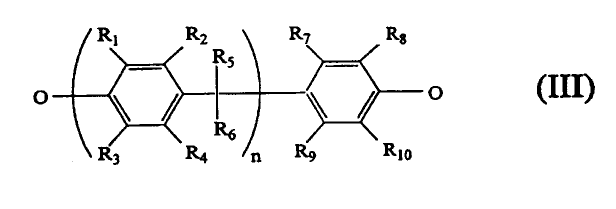
(wherein R₁, R₂, R₃, R₄, R₅, R₆, R₇, R₈, R₉, and R₁₀ in the formula (III) are respectively a hydrogen atom, an alkyl group of C₁₋₂₀, a cycloalkyl group of C_{1 -20}, an alkoxy group of C₁₋₂₀, an aryl group of C₆₋₂₀, an alkylaryl group of C₆₋₂₀, or an arylalkyl group of C₆₋₂₀; and n is an integer of 0 to 5.); and
X_{1,} X₂, X₃, and X₄ are respectively a hydrogen atom; an alkyl group of C₁₋₂₀, a cycloalkyl group of C₁₋₂₀, an alkoxy group of C₁₋₂₀, an aryl group of C₆₋₂₀, an alkylaryl group of C₆₋₂₀, or an arylalkyl group of C₆₋₂₀.

A half metallocene compound used for preparing the metallocene catalyst according to the present invention is commercially available. Also, the half metallocene compound may be prepared according to a method which is known already.

The metallocene catalyst according to the present invention is employed with a co-catalyst in order to prepare polystyrene, particularly having a syndiotactic structure.

The co-catalyst is an organometallic compound or a mixture of non-coordinated Lewis acid and alkylaluminum as it is widely known. The organometallic compound is an alkylaluminoxane or an organoaluminum compound. The representative examples of alkylaluminoxane are methylaluminoxane (MAO) and modified methylaluminoxane (MMAO), and the like. The organoaluminum compound is an aluminoxane having a structural unit represented by the general formula (D). There are an aluminoxane having a chain structure represented by the general formula (E) and an aluminoxane having a cyclic structure represented by the general formula (F). 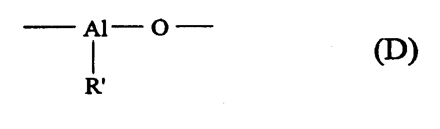 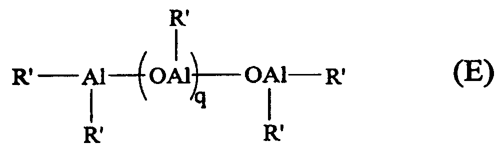 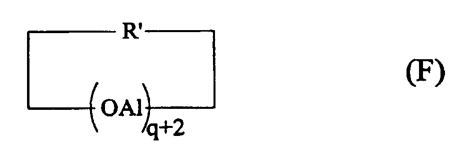 where R' is an alkyl group of C₁₋₆ and q is an integer of 0 to 100.

In the component ratio of the multi-metallic metallocene catalyst to organometallic compound, the molar ratio of a transition metal (Group IVB: titanium, zirconium, or hafnium) in the multi-metallic metallocene catalyst to the aluminum in the organometallic compound, in other words, the molar ratio of the transition metal to aluminum is in the range of about 1 : 1 to about 1 : 1 10⁶ and it is preferable in the range of about 1 : 10 to about 1 : 1 10⁴.

The co-catalyst of the present invention can be a mixture of non-coordinated Lewis acid and alkylaluminum. Examples of the non-coordinated Lewis acid include N, N-dimethylanilin tetrakis(pentafluorophenyl)borate, triphenylcarbenium tetrakis(pentafluorophenyl)borate, ferrocerium tetrakis (pentafluorophenyl)borate, and tris(pentafluorophenyl)borate, and the like. Examples of the alkylaluminum include trimethylaluminum, triisobutylaluminum, tri(n-butyl)aluminum, tri(n-propyl)aluminum, and triisopropylaluminum, and the like.

The molar ratio of the non-coordinated Lewis acid to the transition metal in the catalyst system according to the present invention is preferably in the range of about 0.1 : 1 to about 20 : 1. The molar ratio of the alkylaluminum to transition metal in the catalyst system is preferably in the range of about 1 : 1 to about 3000 : 1 and more preferably in the range of about 50 : 1 to about 1000 : 1.

In using the catalyst system according to the present invention, monomers are styrene or styrene derivatives. The monomers are homopolymerized or copolymerized.

Styrene and styrene derivatives are represented by the general formulas (i) or (j): 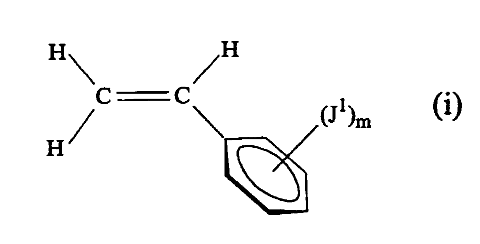 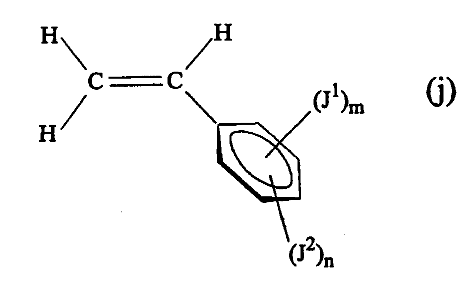 where J¹ in formula (i) is a hydrogen atom; a halogen atom; or a substituent including at least one selected from the group of C, O, Si, P, S, Se and Sn, and m is an integer of 1 to 3, and J¹s are different if m is 2 or 3; and
where J¹ in formula (j) is the same as defined in formula (i), J² is a substituent group of C₂₋₁₀ having at least one unsaturated bond, m is an integer of 1 to 3, and n is an integer of 1 or 2, and J¹s are different if m is 2 or 3; and J²s are different if n is 2 or 3.

The present invention may be better understood by reference to the following examples that are intended for purposes of illustration and are not to be confined as in any way limiting the scope of the present invention, which is defined in the claims appended hereto.

### Examples

### Example 1: Synthesis of Catalyst 1

15 mmol (4.265g) of 2,2-bis(4-hydroxy-3,5-dimethylphenyl) propane was added in a round-bottomed flask and diluted with 100 ml of toluene. 10 mmol (2.762g) of pentamethyl cyclopentadienyl titanium trimethoxide in 100 ml of toluene was slowly added to the mixture at room temperature. After adding, the temperature was elevated to 70 °C and it was reacted for 18 hours. Then, the toluene and produced methanol were removed under a reduced pressure, 200 ml of pentane was added to the mixture and stirred at -78 °C for 30 minutes, and a solid phase and a liquid phase were separated with cannular. The solid phase was dried about 100 °C for 5 hours under a reduced pressure. The resulting compound 9 mmol (11.495g) was diluted with 100 ml of toluene. 9.05 mmol (2.500g) of pentamethyl cyclopentadienyl titanium trimethoxide in 100 ml of toluene was slowly added to the mixture at room temperature. After adding, the temperature was elevated to 70 °C and reaction was carried out for 18 hours. Then, the toluene and produced methanol were removed under a reduced pressure, 200 ml of pentane was added to the mixture and stirred at -78 °C for 30 minutes, and a solid phase and a liquid phase were separated with cannular. The solid phase was dried about 100 °C for 5 hours under a reduced pressure, and a trimetallic metallocene catalyst (Catalyst 1) was obtained. The yield of Catalyst 1 was 80 %.

### Example 2: Synthesis of Catalyst 2

Catalyst 2 was prepared in the same manner as in Example 1 except that α,α'-bis(4-hydroxy-3,5-dimethylphenyl)-1,4-diisopropyl benzene was used instead of 2,2-bis(4-hydroxy-3,5-dimethylphenyl) propane.

### Example 3: Synthesis of Catalyst 3

15 mmol (4.265g) of 2,2-bis(4-hydroxy-3,5-dimethylphenyl) propane was added in a round-bottomed flask and diluted with 100 ml of toluene. 10 mmol (2.762g) of pentamethyl cyclopentadienyl titanium trimethoxide in 100 ml of toluene was slowly added to the mixture at room temperature. After adding, the temperature was elevated to 70 °C and it was reacted for 18 hours. Then, the toluene and produced methanol were removed under a reduced pressure, 200 ml of pentane was added to the mixture and stirred at -78 °C for 30 minutes, and a solid phase and a liquid phase were separated with cannular. The solid phase was dried about 100 °C for 5 hours under a reduced pressure, and compound I was obtained. 5 mmol (1.421g) of 2,2-bis(4-hydroxy-3,5-dimethylphenyl) propane was diluted with 100 ml of toluene in another flask. 10 mmol (2.762g) of pentamethyl cyclopentadienyl titanium trimethoxide in 100 ml of toluene was slowly added to the mixture at room temperature. After adding, the temperature was elevated to 70 °C and reaction was carried out for 18 hours. Then, the toluene and produced methanol were removed under a reduced pressure, the mixture was diluted with 100 ml of toluene, and then 5 mmol (6.386g) of compound I in 100 ml toluene was slowly added to the mixture at room temperature. After adding, the temperature was elevated to 70 °C and reaction was carried out for 18 hours. Then, the toluene and produced methanol was removed under a reduced pressure, 200 ml of pentane was added to the mixture and stirred at -78 °C for 30 minutes, and a solid phase and a liquid phase were separated with cannular. The solid phase was dried about 100 °C for 5 hours under a reduced pressure, and a tetrametallic metallocene catalyst (Catalyst 3) was obtained. The yield of Catalyst 3 was 75%.

### Example 4: Synthesis of Catalyst 4

Catalyst 4 was prepared in the same manner as in Example 3 except that α,α'-bis(4-hydroxy-3,5-dimethylphenyl)-1,4-diisopropyl benzene was used instead of 2,2-bis(4-hydroxy-3,5-dimethylphenyl) propane.

### Examples 5-8: Styrene Polymerization (Bulk Polymerization)

Styrene polymerization was performed using the multi-metallic metallocene catalysts (Catalysts 1∼4) prepared in Examples 1∼4.

The prepolymerization reaction was proceeded with a metallocene catalyst having 4.28x10⁻⁶ mol of titanium, 200 ml of styrene monomer, 1.3x10⁻³ mmol of triisobutylaluminum, and methylaluminoxane having 4.28x10⁻⁴ mol of aluminum, for 1 hour at 70 °C. A metallocene catalyst having 4.28x10⁻⁶mol of titanium and 4.28x10⁻⁴ mol of methylaluminoxane having 4.28x10⁻⁴ mol of aluminum were fed successively 7 times at 5 min interval, and then polymerization was carried out for 1 hour.

A temperature-controlling equipment and a mechanical stirrer were employed in the styrene polymerization. The polymerization was performed in a glass reactor with a valve capable of feeding monomer and nitrogen gas. After purified styrene was added to the glass flask filled with nitrogen gas, triisobutylaluminum and methylaluminoxane as a co-catalyst were added over stirring. To the resulting mixture, a certain amount of catalyst was added to start polymerizing of the monomer. After the solution was stirred for a while, a small amount of methanol (200ml) was added to stop polymerization. The obtained mixture was poured into methanol containing hydrogen chloride (HCl) to give a styrene polymer. The crude styrene polymer was washed with methanol, filtered, and vacuum-dried to obtain a pure styrene polymer. The physical properties of the polystyrene were shown in Table 1.

### Comparative Example 1

Styrene polymerization was performed in the same manner as in Examples 5-8 except that pentamethyl cyclopentadienyl titanium trimethoxide [Cp*Ti(OCH₃)₃: comp. catalyst] which is a conventional metallocene catalyst as a catalyst was used. The physical properties of the polystyrenes obtained by polymerization are shown in Table 1.

**Table 1**

| Example (Catalyst #) | Yield (g) | Activity KgPS/[Ti]hr | Stereo-regularity (%) | Molecular weight ( 10³) | Molecular weight distribution | Melting point () |
|---|---|---|---|---|---|---|
| Example 5 (Catalyst 1) | 114 | 5327 | 98 | 500 | 2.51 | 272 |
| Example 6 (Catalyst 2) | 119 | 5561 | 97 | 480 | 2.31 | 271 |
| Example 7 (Catalyst 3) | 116 | 5421 | 98 | 510 | 2.53 | 271 |
| Example 8 (Catalyst 4) | 119 | 5561 | 98 | 500 | 2.50 | 272 |
| Comp. Ex. 1 (Comp. Catalyst) | 90 | 4206 | 97 | 450 | 2.54 | 272 |

### Examples 9-12: Copolymerization of Styrene and t-butyl Styrene (Bulk polymerization)

The styrene copolymerization was performed using the multi-metallic metallocene catalysts (Catalysts 1∼4) prepared in Examples 1∼4. Prepolymerization reaction was proceeded with a metallocene catalyst having 1.5x10⁻⁵ mol of titanium, 196 ml of styrene monomer, 4 ml of t-butyl styrene, 1.3x10⁻² mmol of triisobutylaluminum, and a methylaluminoxane having 3.0x10⁻³ mol of aluminum, for 1 hour at 70 °C. Further, a metallocene catalyst having 1.5x10⁻⁵ mol of titanium and a methylaluminoxane having 3.0x10⁻³ mol of aluminum was fed successively 7 times at 5 min interval, and then copolymerization was carried out for 1 hour.

A temperature-controlling equipment and a mechanical stirrer was employed in the styrene copolymerization. The copolymerization was performed in a glass reactor with a valve capable of feeding monomer and nitrogen gas. After the purified styrene and t-butyl styrene was added to the glass flask filled with nitrogen gas, triisobutylaluminum and methylaluminoxane as a co-catalyst were added over stirring. To the resulting mixture, a certain amount of a catalyst was added to start polymerizing of the monomer. After the solution was stirred for a while, a small amount of methanol (200ml) was added to stop polymerization. The obtained mixture was poured into methanol containing hydrogen chloride (HCl) to give a styrene copolymer product. The crude styrene copolymer product was washed with methanol, filtered, and vacuum-dried to obtain a pure styrene copolymer. The physical properties of the polystyrenes were shown in Table 2.

### Comparative Example 2

Styrene copolymerization was performed in the same manner as in Examples 9-12 except that pentamethyl cyclopentadienyl titanium trimethoxide [Cp*Ti(OCH₃)₃] was used as a catalyst. The physical properties of the polystyrenes obtained by copolymerization are shown in Table 2.

**Table 2**

| Example (Catalyst #) | Yield (g) | Activity KgPS/[Ti]hr | Stereo-regularity (%) | Molecular weight ( 10³) | Molecular weight distribution | Melting point ( ) |
|---|---|---|---|---|---|---|
| Example 9 (Catalyst 1) | 90 | 1500 | 98 | 430 | 2.21 | 238 |
| Example 10 (Catalyst 2) | 91 | 1517 | 97 | 420 | 2.20 | 237 |
| Example 11 (Catalyst 3) | 87 | 1450 | 98 | 460 | 2.17 | 238 |
| Example 12 (Catalyst 4) | 88 | 1467 | 98 | 470 | 2.18 | 238 |
| Comp. Ex. 2 (Comp. Catalyst) | 85 | 1417 | 97 | 410 | 2.14 | 238 |

The stereoregularity of polymers in Table 1 and 2 was obtained in percent (%) by measuring weight of polymer residue that was extracted with methyl ethyl ketone, corresponding to syndiotactic index (S.I.). The melting point (Tm) was measured with Differential Scanning Calorimetry (DSC), by heating up to 300 °C, resting for 5 min, cooling, and heating the test samples. The rate of temperature elevation was 10 °C/min. The molecular weight and molecular weight distribution were measured with Gel Permeation Chromatography (GPC).

## Claims

1. A trimetallic metallocene catalyst for styrene polymerization represented by the general formula (I): 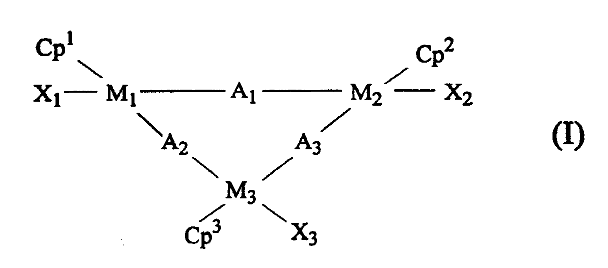 where M₁, M₂ and M₃ are independently a transition metal of Group IV of the Periodic Table;
Cp¹, Cp² and Cp³ are independently selected from a cyclopentadienyl group, an indenyl group, a fluorenyl group, and derivatives thereof, form η⁵-bond with a transition metal such as M₁, M₂ and M₃;
A₁, A₂ and A₃ are represented by the following general formula (III); 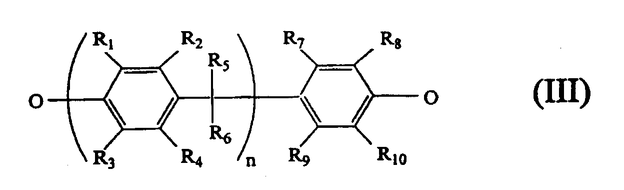
(where R₁, R₂, R₃, R₄, R₅, R₆, R₇, R₈, R₉, and R₁₀ in the formula (III) are independently a hydrogen atom, an alkyl group of C₁₋₂₀, a cycloalkyl group of C₁₋₂₀, an alkoxy group of C₁₋₂₀, an aryl group of C₆₋₂₀, an alkylaryl group of C₆₋₂₀, or an arylalkyl group of C₆₋₂₀; and n is an integer of 0 to 5.); and
X_{1,} X₂ and X₃ are independently a hydrogen atom; an alkyl group of C₁₋₂₀, a cycloalkyl group of C₁₋₂₀, an alkoxy group of C₁₋₂₀, an aryl group of C₆₋₂₀, an alkylaryl group of C₆₋₂₀, or an arylalkyl group of C₆₋₂₀.

2. A tetrametallic metallocene catalyst for styrene polymerization represented by the general formula (II): 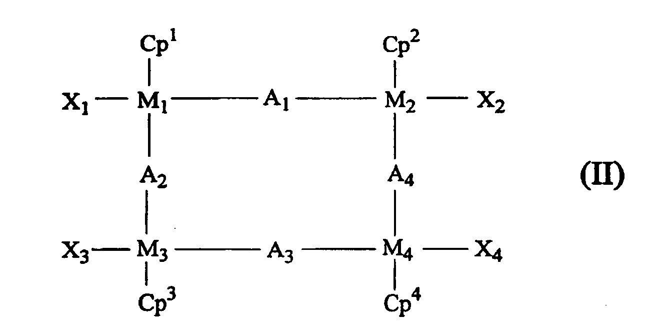 where M₁, M₂, M₃ and M₄ are independently a transition metal of Group IV of the Periodic Table;
Cp¹, Cp², Cp³ and Cp⁴ are independently selected from a cyclopentadienyl group, an indenyl group, a fluorenyl group, and derivatives thereof, form η⁵-bond with a transition metal such as M₁, M₂, M₃ and M₄;
A₁, A₂, A₃, and A₄ are represented by the following general formula (III); 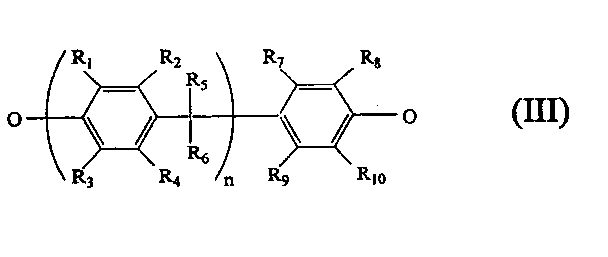 (where R₁, R₂, R₃, R₄, R₅, R₆, R₇, R₈, R₉, and R₁₀ in the formula (III) are independently a hydrogen atom, an alkyl group of C₁₋₂₀, a cycloalkyl group of C₁₋₂₀, an alkoxy group of C₁₋₂₀, an aryl group of C₆₋₂₀, an alkylaryl group of C₆₋₂₀, or an arylalkyl group of C₆₋₂₀; and n is an integer of 0 to 5.); and
X₁, X₂, X₃, and X₄ are independently a hydrogen atom; an alkyl group of C₁₋₂₀, a cycloalkyl group of C₁₋₂₀, an alkoxy group of C₁₋₂₀, an aryl group of C₆₋₂₀, an alkylaryl group of C₆₋₂₀, or an arylalkyl group of C₆₋₂₀.

3. A method of preparing a trimetallic metallocene catalyst for styrene polymerization, which comprises:
(a) providing a bimetallic metallocene catalyst represented by the following general formula (C) by reacting a transition metal compound represented by the following general formula (A) with a compound having two hydroxyl functional groups represented by the following general formula (B); and
(b) reacting the bimetallic metallocene catalyst with a half metallocene compound of formula (A):
MR¹ ₐR² _{b}R³ _{c}R⁴ _{4-(a+b+c)} (A) 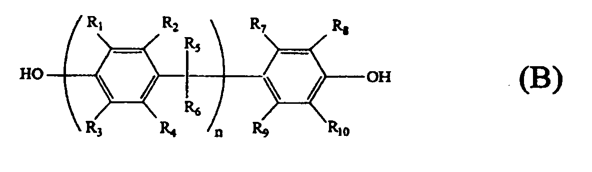 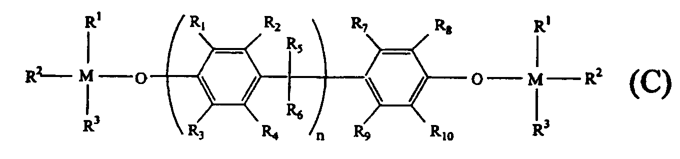
where M in the formulas (A), (B), and (C) represents a transition metal of Group IV of the Periodic Table such as titanium, zirconium or hafnium; R¹, R², R³ and R⁴ in the formulae (A) and (C) are independently a hydrogen atom, a halogen atom, an alkyl group of C₁₋₂₀, a cycloalkyl group of C₁₋₂₀, an alkoxy group of C₁₋₂₀, an aryl group of C₆₋₂₀, an alkylaryl group of C₆₋₂₀, an arylalkyl group of C₆₋₂₀, a cyclopentadienyl group, a substituted cyclopentadienyl group, an indenyl group, a, substituted indenyl group, a fluorenyl group, or a substituted fluorenyl group; a, b and c are independently an integer of 0 to 4; R₁, R₂, R₃, R₄, R₅, R₆, R₇, R₈, R₉, and R₁₀ in the formulae (B) and (C) are independently a hydrogen atom, an alkyl group of C₁₋₂₀, a cycloalkyl group of C_{1 -20}, an alkoxy group of C₁₋₂₀, an aryl group of C₁₋₂₀, an alkylaryl group of C₁₋₂₀, or an arylalkyl group of C₆₋₂₀; and n is an integer of 0 to 5;
wherein said trimetallic metallocene catalyst is represented by the general formula (I): 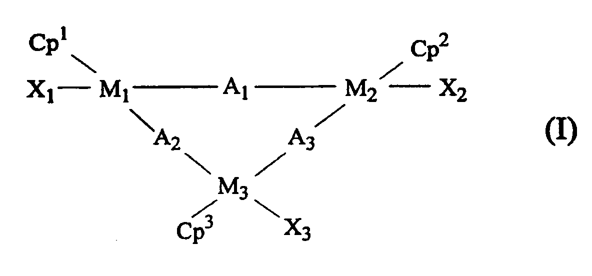 where M₁, M and M₃ are independently a transition metal of Group IV of the Periodic Table;
Cp¹, Cp² and Cp³ are independently selected from a cyclopentadienyl group, an indenyl group, a fluorenyl group, and derivatives thereof, form η⁵-bond with a transition metal such as M₁, M₂ and M₃;
A₁, A₂ and A₃ are represented by the following general formula (III); 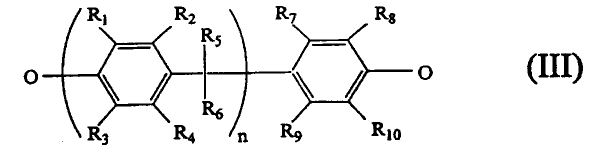 (where R_{1,} R₂, R₃, R₄, R₅, R₆, R₇, R₈, R₉, and R₁₀ in the formula (III) are independently a hydrogen atom, an alkyl group of C₁₋₂₀, a cycloalkyl group of C₁₋₂₀, an alkoxy group of C₁₋₂₀, an aryl group of C₆₋₂₀, an alkylaryl group of C₆₋₂₀, or an arylalkyl group of C₆₋₂₀; and n is an integer of 0 to 5.); and
X_{1,} X₂ and X₃ are independently a hydrogen atom; an alkyl group of C₁₋₂₀^{,} a cycloalkyl group of C₁₋₂₀, an alkoxy group of C₁₋₂₀, an aryl group of C₆₋₂₀, an alkylaryl group of C₆₋₂₀, or an arylalkyl group of C₆₋₂₀.

4. A method of preparing a tetrametallic metallocene catalyst for styrene polymerization, which comprises:
(a) providing a bimetallic metallocene catalyst represented by the following general formula (C) by reacting a transition metal compound represented by the following general formula (A) with a compound having two hydroxyl functional groups represented by the following general formula (B); and
(b) reacting the bimetallic metallocene catalyst with a half metallocene compound of formula (A) and a compound having two hydroxyl functional groups of formula (B):
MR¹ ₐR² _{b}R³ _{c}R⁴ _{4-(a+b+c)} (A) 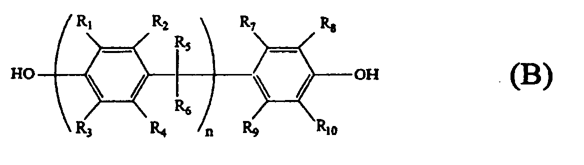 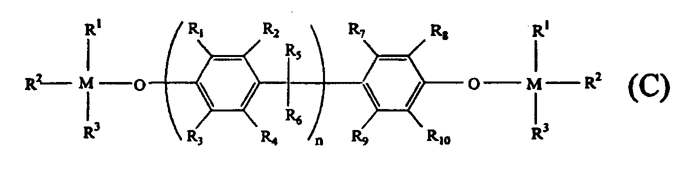
where M in the formulae (A), (B), and (C) represents a transition metal of Group IV of the Periodic Table such as titanium, zirconium or hafnium; R¹, R², R³ and R⁴ in the formulae (A) and (C) are independently a hydrogen atom; a halogen atom, an alkyl group of C₁₋₂₀, a cycloalkyl group of C₁₋₂₀, an alkoxy group of C₁₋₂₀, an aryl group of C₆₋₂₀, an alkylaryl group of C₆₋₂₀, an arylalkyl group of C₆₋₂₀, a cyclopentadienyl group, a substituted cyclopentadienyl group, an indenyl group, a substituted indenyl group, a fluorenyl group, or a substituted fluorenyl group; a, b and c are independently an integer of 0 to 4; R₁, R₂, R₃, R₄, R₅, R₆, R₇, R₈, R₉, and R₁₀ in the formulas (B) and (C) are independently a hydrogen atom, an alkyl group of C₁₋₂₀, a cycloalkyl group of C₁₋₂₀, an alkoxy group of C₁₋₂₀, an aryl group of C₁₋₂₀, an alkylaryl group of C₁₋₂₀, or an arylalkyl group of C₆₋₂₀; and n is an integer of 0 to 5;
wherein said tetrametallic metallocene catalyst is represented by the general formula (II): 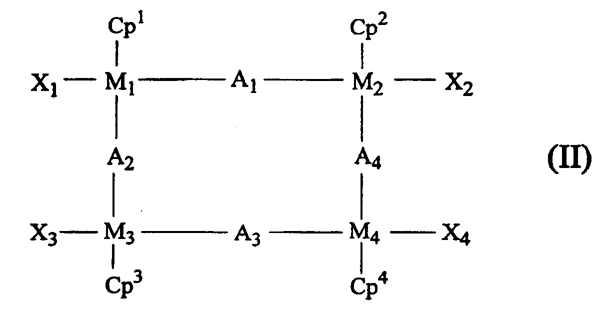 where M₁, M₂, M₃ and M₄ are independently a transition metal of Group IV of the Periodic Table;
Cp¹, Cp², Cp³ and Cp⁴ are independently selected from a cyclopentadienyl group, an indenyl group, a fluorenyl group, and derivatives thereof, form η⁵-bond with a transition metal such as M₁, M₂, M₃ and M₄;
A₁, A₂, A₃, and A₄ are represented by the following general formula (III); 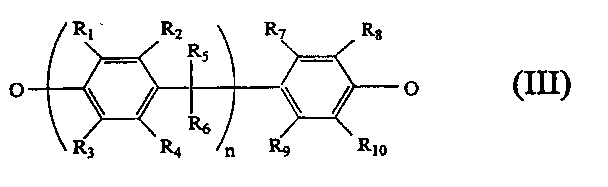 (where R₁, R₂, R₃, R₄, R₅, R₆, R₇, R₈, R₉, and R₁₀ in the formula (III) are independently a hydrogen atom, an alkyl group of C₁₋₂₀, a cycloalkyl group of C₁₋₂₀, an alkoxy group of C₁₋₂₀, an aryl group of C₆₋₂₀, an alkylaryl group of C₆₋₂₀, or an arylalkyl group of C₆₋₂₀; and n is an integer of 0 to 5.); and X_{1,} X₂, X₃, and X₄ are independently a hydrogen atom; an alkyl group of C₁₋₂₀^{,} a cycloalkyl group of C₁₋₂₀, an alkoxy group of C₁₋₂₀, an aryl group of C₆₋₂₀, an alkylaryl group of C₆₋₂₀, or an arylalkyl group of C₆₋₂₀.

5. The method of preparing a trimetallic metallocene catalyst for styrene polymerization as defined in claim 1 or 2, wherein said transition metal compound is selected from the group consisting of pentamethyl cyclopentadienyl titanium trimethoxide, 1,2,3,4-tetramethyl cyclopentadienyl titanium trimethoxide, 1,2,3-trimethyl cyclopentadienyl titanium trimethoxide, 1,2-dimethyl cyclopentadienyl titanium trimethoxide, 1-methyl cyclopentadienyl titanium trimethoxide, cyclopentadienyl titanium trimethoxide, and 1,2,3,4-tetramethyl-5-ethyl cyclopentadienyl titanium trimethoxide, and wherein said the compound having two hydroxyl groups is selected from the group consisting of 4,4'-dihydroxyphenyl methane, 2,2-bis(4-hydroxyphenyl) propane, 2,2-bis(4-hydroxyphenyl) butane, 2,2-bis(4-hydroxy-3,5-dimethylphenyl) propane, 4,4'-(1-α-methylbenzylidene) bisphenol, 4,4'-dihydroxyphenyl methane, 1,1-bis(4-hydroxyphenyl) ethane, 4,4'-ethylidene bisphenol, 2,2'-methylene bis(6-t-butyl-4-methylphenol), 2,2'-methylene bis(6-t-butyl-4-ethylphenol), α,α'-bis(4-hydroxyphenyl)-1,4-diisopropyl benzene, and α,α'-bis(4-hydroxy-3,5- dimethylphenyl)-1,4-diisopropyl benzene.

6. A method of preparing a styrenic polymer, which comprises employing a catalyst system consisting of a trimetallic or tetrametallic metallocene catalyst as claimed in claim 1 or 2, as a catalyst and an organometallic compound or a mixture of a non-coordinated Lewis acid and alkylaluminum as a co-catalyst.

7. The method of preparing a styrenic polymer as claimed in claim 6, wherein said organometallic compound is an alkylaluminoxane or an organoaluminum compound.

8. The method of preparing a styrenic polymer as claimed in claim 7, wherein said alkyaluminoxane is a methylaluminoxane (MAO) or a modified methylaluminoxane (MMAO).

9. The method of preparing a styrenic polymer as claimed in claim 7, wherein said organoaluminum compound is an alummoxane having a structural unit represented by the general formula (D), the aluminoxane having a chain structure represented by the general formula (E) or a cyclic structure represented by the general formula (F): 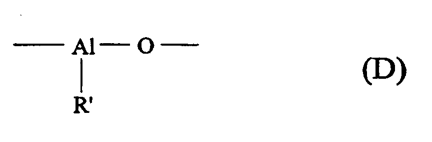 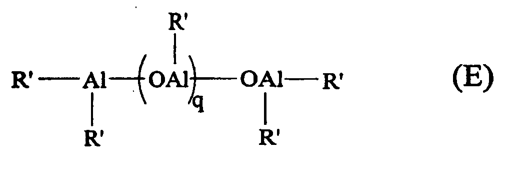 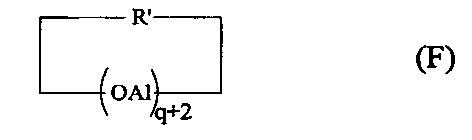 where R' is an alkyl group of C₁₋₆ and q is an integer of 0 to 100.

10. The method of preparing a styrenic polymer as claimed in any of claims 6 to 9, wherein the molar ratio of the transition metal to aluminum is in the range of 1 : 1 to 1 : 1 10⁶.

11. The method of preparing a styrenic polymer as claimed in any of claims 6 to 10, wherein said non-coordinated Lewis acid is selected from N, N-dimethylanilin tetrakis(pentafluorophenyl) borate, triphenylcarbenium tetrakis(pentafluorophenyl) borate, ferrocerium tetrakis (pentafluorophenyl) borate, and tris(pentafluorophenyl) borate, and said alkylaluminum is selected from the group consisting of trimethylaluminum, triisobutylaluminum, tri(n-butyl)aluminum, tri(n-propyl)aluminum, and triisopropylaluminum.

12. The method of preparing a styrenic polymer as claimed in any of claims 6 to 11, wherein the molar ratio of the non-coordinated Lewis acid to the transition metal in the catalyst system is in the range of 0.1 : 1 to 20 : 1 and the molar ratio of the alkylaluminum to transition metal is in the range of 1: 1 to 3000 : 1.

13. The method of preparing a styrenic polymer as claimed in any of claims 6 to 12, wherein said polymer is a homopolymerized or copolymerized from the styrenic monomers represented by the general formulae (i) to (j): 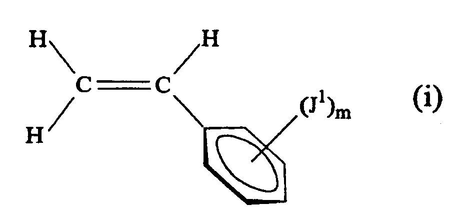 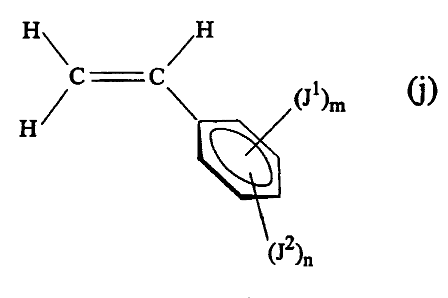 where J¹ in formula (i) is a hydrogen atom; a halogen atom; or a substituent including at least one selected from the group of C, O, Si, P, S, Se and Sn, and m is an integer of 1 to 3, and J¹s are different if m is 2 or 3; and
where J¹ in formula (j) is the same as defined in formula (i), J² is a substituent group of C₂₋₁₀ having at least one unsaturated bond, m is an integer of 1 to 3, and n is an integer of 1 or 2, and J¹s are different if m is 2 or 3; and J²s are different if n is 2 or 3.
